# EUROPÄISCHE PATENTSCHRIFT

(11) **EP 0 393 012 B1**
(45) Veröffentlichungstag und Bekanntmachung des Hinweises auf die Patenterteilung: **03.08.1994**
(21) Anmeldenummer: 90890087.1
(22) Anmeldetag: 27.03.1990
(51) Int. Cl.: B60C 11/11

(54) **Radialreifen für Lastkraftwagen**
Radial tyre for lorries
Pneumatique radial pour camions

(30) Priorität: 13.04.1989 AT 875/89
(43) Veröffentlichungstag der Anmeldung: 17.10.1990
(73) Patentinhaber: Semperit Reifen Aktiengesellschaft, A-2514 Traiskirchen (AT)
(72) Erfinder: Loidl, Helmut, A-2393 Sparbach Nr. 33 (AT); Stelzer, Josef, A-1120 Wien (AT)
(74) Vertreter: Vinazzer, Edith

(56) Entgegenhaltungen:
- DE-U- 8 807 996
- GB-A- 2 046 188
- GB-A- 2 093 777
- US-A- 4 412 576

## Beschreibung

Die Erfindung betrifft einen Radialreifen für LKW, insbesondere für deren Antriebsräder mit einem Laufflächenprofil, welches über seine Breite eine Anzahl von durch Umfangsnuten voneinander getrennten Blockreihen aufweist, wobei eine zentrale, entlang des Reifenäquators verlaufende Blockreihe, zwei mittlere und zwei schulterseitig verlaufende Blockreihen vorgesehen sind, und wobei die Einzelblöcke in jeder Blockreihe durch gerade ausgebildete Quernuten bzw. Querrillen voneinander getrennt sind und in Umfangsrichtung verlaufende Blockkanten und Blockkanten, die unter von 90° abweichenden Winkeln zur Äquatorlinie geneigt verlaufen, aufweisen.

Ein Reifen mit einem derartigen Laufflächenprofil ist beispielsweise aus der GB-A 2093777 bekannt. Dieses Laufflächenprofil ist durch gerade verlaufende Umfangsnuten und durch Quernuten bzw. schmälere Einschnitte in Blöcke gegliedert, wobei sämtliche Quernuten und Einschnitte, über die Laufstreifenbreite betrachtet, unter demselben Winkel und gleichsinnig gegenüber der Äquatorlinie geneigt sind.

Aus der EP-A 0235072 ist ein sogenannter all-season-Reifen bekannt, dessen Laufstreifen mit in Umfangsrichtung verlaufenden Blockreihen versehen ist, deren Einzelblöcke durch Feineinschnitte in etwa gleichgroße Blockteile geteilt sind. Die Blöcke sind dabei derart gestaltet, daß sie spitzwinkelige Eckbereiche besitzen.

An moderne LKW-Radialreifen, und insbesondere an Antriebsachsreifen, werden hinsichtlich Sicherheit und Wirtschaftlichkeit immer höhere Anforderungen gestellt. Vor allem muß bei der Entwicklung derartiger Reifen die hohe Motorleistung moderner LKW's und die vom Markt gestellte Anforderung einer hohen Kilometerleistung berücksichtigt werden. In diesem Zusammenhang kommt der Gestaltung des Laufflächenprofiles derartiger Reifen eine besondere Bedeutung zu. Zur Anhebung der Laufleistung ist es teilweise üblich geworden, die Profiltiefe immer mehr zu erhöhen, was sich jedoch, je nach Ausgestaltung des Laufflächenprofiles, ungünstig auf die Stabilität auswirken kann. Herkömmliche Antriebsachsreifen weisen nun oft ein Laufflächenprofil auf, bei dem eine Anzahl von in Umfangsrichtung verlaufenden Blockreihen vorgesehen sind. Die diese Blockreihen voneinander trennenden Umfangsnuten sind hiebei zickzackförmig gestaltet, wobei die Zickzackform teilweise sehr ausgeprägt sein kann. Im Zusammenhang mit der Ausgestaltung der Umfangsnuten steht selbstverständlich auch die Ausgestaltung der Einzelblöcke, deren in Umfangsrichtung verlaufenden Blockkanten demnach einen abgewinkelten Verlauf aufweisen. Der Längsführung des Fahrzeuges kommt aber, insbesondere durch die hohe Motorleistung und die hohe Profiltiefe, eine besondere Bedeutung zu. Bei Fahrzeugen, die mit Antriebsachsreifen der geschilderten Profilausgestaltung versehen sind, neigt aufgrund einer nicht ausreichenden Längsführung die Triebachse zum seitlichen Versetzen. Ein weiters Problem, das bei Reifen mit einem Blockreihenprofil bei fortschreitendem Laufflächenabtrieb auftreten kann, stellt die Bildung sogenannter Sägezähne dar. Hiebei werden die auflaufenden Blockkanten, also jene, die beim Abrollen des Reifens zuerst in Kontakt mit dem Untergrund kommen, weniger abgenutzt als die zweiten Blockkanten. Die bekannten LKW-Antriebsachsreifen sind weiters auch hinsichtlich ihres Traktionsverhaltens, insbesondere auf nasser oder schneeiger Fahrbahn, verbesserungswürdig.

Hier setzt nun die Erfindung ein, deren Aufgabe darin besteht, einen insbesondere für LKW-Antriebsachsen geeigneten LKW-Reifen so zu gestalten, daß er vor allem hinsichtlich Längsführung und Traktion gegenüber den bekannten Ausführungsformen wesentlich verbessert ist, wobei gleichzeitig die genannte Sägezahnbildung während des Abtriebes merklich vermindert sein soll.

Gelöst wird die gestellte Aufgabe erfindungsgemäß dadurch, daß sich jeder Block aus zwei parallelogrammförmigen Blockteilen zusammensetzt, die durch einen Feineinschnitt, der etwa mittig durch den Block verläuft, voneinander getrennt sind, wobei die Quererstreckung der Blockteile größer ist als ihre Umfangserstreckung, wobei jene Blockkanten, die unter von 90° abweichenden Winkeln zur Äquatorlinie geneigt verlaufen, in den mittleren Blockreihen zu den Blockkanten in der zentralen Blockreihe gegensinnig geneigt sind.

Durch die erfindungsgemäßen Maßnahmen wird nun ein Laufflächenprofil geschaffen, bei dem die in Umfangsrichtung orientierten Blockkanten, durch ihre Ausrichtung parallel zur Äquatorlinie, eine sehr gute Längsführung gewährleisten und somit ein seitliches Versetzen der Triebachse weitgehendst vermieden wird. Die erfindungsgemäß vorgenommene Teilung der Blöcke in parallelogrammförmige Blockteile schafft eine Mehrzahl von Kanten, die in Umfangsrichtung beim Abrollen des Reifens greifen, was die Traktion, insbesondere auf nasser oder schneeiger Fahrbahn, erhöht. Diese Maßnahme wirkt sich weiters auch positiv auf die Laufleistung aus, da ein unregelmäßiger Abtrieb, beispielsweise das Entstehen von Sägezähnen, weitgehend verhindert wird. Die vorgeschlagene gewinkelte Anordnung der Blockteilkanten wirkt sich auf die Seitenführung des Reifens günstig aus.

Besonders vorteilhafte Ausgestaltungen bzw. Weiterentwicklungen der Erfindung sind in den Unteransprüchen enthalten.

Für einen gleichmäßigen Abtrieb im Schulterbereich des Laufflächenprofiles wirkt es sich günstig aus, wenn der Winkel der geneigten Blockkanten in den schulterseitig verlaufenden Blockreihen um mindestens 2°, vorzugsweise um etwa 5°, kleiner gewählt wird als der Winkel der geneigten Blockkanten in den benachbarten Blockreihen.

Zur Unterstützung der Längsführung ist es weiters günstig, wenn die zentrale Blockreihe von den benachbarten Blockreihen durch je eine gerade verlaufende Umfangsnut, deren Breite maximal 5mm, bevorzugt etwa 3mm, beträgt, getrennt ist.

Stabilität und gleichmäßiger Abtrieb im Mittelbereich des Laufflächenprofiles wird dadurch begünstigt, daß die die Blöcke in der zentralen Blockreihe voneinander trennenden Querrillen eine Breite von maximal 5mm, bevorzugt etwa 3mm, aufweisen.

Bei einer bevorzugten Ausführungsform der Erfindung weist jeder Block zwei parallelogrammförmige Blockteile auf, die im wesentlichen gleich groß sind.

Bei einer anderen Ausführungsform der Erfindung weisen die Blöcke in den schulterseitig verlaufenden Blockreihen und die Blöcke in den diesen benachbarten Blockreihen jeweils einen Blockteil auf, der in Querrichtung um 5 - 25 %, vorzugsweise um ca. 15 %, länger ausgeführt ist als der zweite Blockteil, wobei die Stirnseite eines längeren Blockteiles der einen Blockreihe jeweils einer Stirnseite eines kürzeren Blockteiles aus der benachbarten Blockreihe gegenüber steht. Dadurch ergibt sich ein etwa zickzackförmiger Verlauf der breiten Umfangsnuten mit in Querrichtung gegeneinander versetzten Abschnitten, was sich auf ein gleichmäßiges Abriebsbild positiv auswirkt.

In diesem Zusammenhang ist es auch von Vorteil, wenn die Eckbereiche der Blöcke bzw. der Blockteile abgeschrägt oder abgerundet ausgebildet sind.

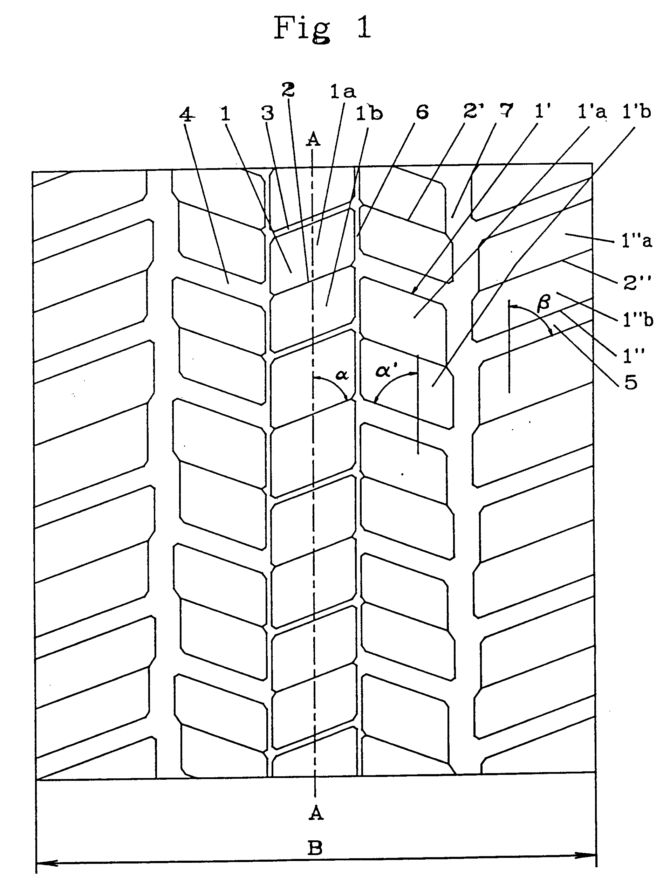

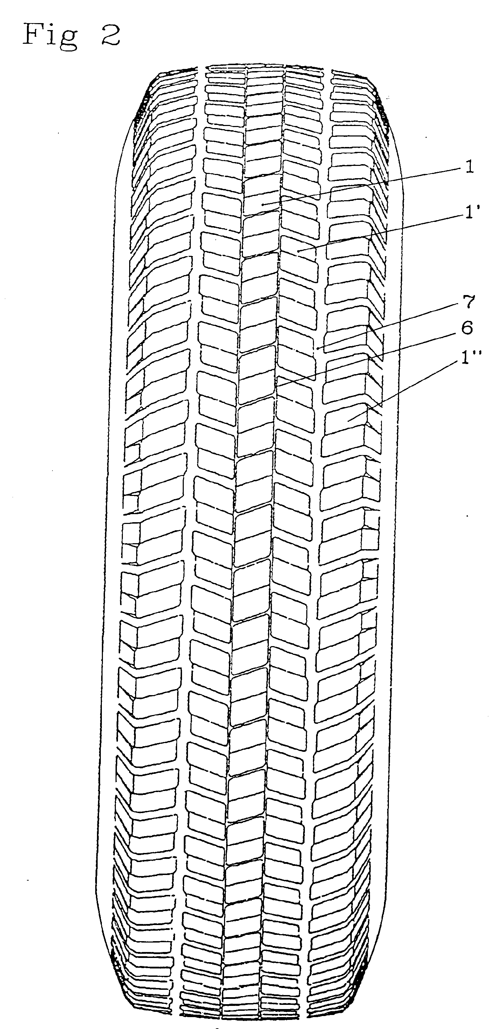

Weitere Merkmale, Vorteile und Einzelheiten der Erfindung werden nun anhand der Zeichnung, die ein Ausführungsbeispiel des erfindungsgemäßen Fahrzeugluftreifens darstellt, näher beschrieben. Hiebei ist in Fig. 1 eine Draufsicht auf eine Teilabwicklung des Laufflächenprofiles und in Fig. 2 eine Vorderansicht des Reifens dargestellt.

Der in Fig. 2 dargestellte Fahrzeugluftreifen ist als Radialreifen ausgeführt und insbesondere als LKW-Antriebsachsreifen geeignet. Im folgenden wird nun insbesondere auf Fig. 1, wo eine Teilabwicklung des Laufflächenprofiles über eine Breite B, die der Breite des Reifens in der Bodenaufstandsfläche unter Nenndruck und Nennlast entspricht, Bezug genommen. Das Laufflächenprofil weist fünf in Umfangsrichtung verlaufende und durch Umfangsnuten 6, 7 voneinander getrennte Blockreihen auf. Jede Blockreihe setzt sich aus einer Vielzahl von in Umfangsrichtung aneinandergereihten Blöcken 1, 1′ und 1˝ zusammen.

Jeder Block 1, 1′, 1˝ ist, in Draufsicht betrachtet, im wesentlichen in der Form eines Parallelogrammes gestaltet. Jeder Block 1, 1′, 1˝ ist weiters durch einen in Querrichtung verlaufenden Feineinschnitt 2, 2′, 2˝ in zwei parallelogrammförmige Blockteile 1a, 1b, 1′a, 1′b, 1˝a, 1˝b gegliedert, wobei die Teilung, etwa in Blockmitte erfolgt. Jeweils zwei der Seitenkanten der Blockteile 1a, 1b, 1′a, 1′b, 1˝a, 1˝b verlaufen parallel zur Äquatorlinie A-A des Reifens, die beiden anderen Seitenkanten schließen mit der Äquatorlinie A-A von 90° abweichenden Winkel α, α′, β ein, auf die noch näher eingegangen wird.

Durch die Gliederung des Laufflächenprofiles in fünf Blockreihen verläuft eine Blockreihe entlang des Reifenäquators A-A. Die einzelnen Blöcke 1 dieser Blockreihe sind voneinander durch gerade ausgebildete Querrillen 3 getrennt, deren Breite maximal 5mm, bevorzugt etwa 3mm, beträgt. Die Feineinschnitte 2 und die die Querrillen 3 begrenzenden Blockkanten der Blöcke 1 verlaufen, was sich aus der beschriebenen Teilung der Blöcke ergibt, parallel bzw. im wesentlichen parallel zueinander und sind unter einem Winkel , der in einem Bereich zwischen 50 und 80° gewählt wird, gegenüber dem Reifenäquator A-A geneigt. Bevorzugt beträgt dieser Winkel α 65 bis 75°, insbesondere etwa 70°. Die Blöcke 1 dieser Blockreihe sind bevorzugt in Umfangsrichtung länger ausgeführt als in Querrichtung.

Seitlich an die entlang des Reifenäquators A-A angeordnete Blockreihe schließt in jeder Laufflächenhälfte eine Blockreihe an, die durch eine relativ schmale Umfangsnut 6, die als gerade in Umfangsrichtung verlaufende Nut ausgeführt ist, von der mittleren Blockreihe getrennt ist. Die beiden Umfangsnuten 6 weisen eine Maximalbreite von 5mm auf, bevorzugt sind sie etwa 3mm breit. Die Blöcke 1′ dieser beiden Blockreihen sind durch gerade verlaufende Quernuten 4 voneinander getrennt, die jedoch wesentlich breiter ausgeführt sind als die Querrillen 3. Die Breite der Quernuten 4 beträgt maximal 12mm, bevorzugt etwa 10mm. Auch hier ergibt sich durch die Parallelogrammform der Blockteile 1′a, 1′b eine parallele bzw. im wesentlichen parallele Anordnung von Feineinschnitten 2′ und den die Quernuten 4 begrenzenden Blockkanten. Die Feineinschnitte 2′ und die die Quernuten 4 begrenzenden Blockkanten sind gegensinnig zu den Feineinschnitten 2 und den die Querrillen 3 begrenzenden Blockkanten unter einem Winkel α′ geneigt. Hiebei wird α′ in einem Bereich gewählt, der den beim Winkel α angegebenen Werten entspricht. Bevorzugt wird das Laufflächenprofil so gestaltet, daß die Winkel α und α′ gleich groß gewählt werden. Es sei jedoch erwähnt, daß α′ ≠ α, beispielsweise α kleiner als α′, sein kann.

Die schulterseitig gelegenen Blockreihen sind von den innen benachbarten Blockreihen durch je eine breite Umfangsnut 7 getrennt. Die Breite der Umfangsnut 7 beträgt hiebei im Neuzustand des Reifens ca. 12mm. Die Blöcke 1˝ sind ebenfalls durch gerade verlaufende Quernuten 5 voneinander gerennt, deren Breite der Breite der Quernuten 4 entspricht. Die Feineinschnitte 2˝ und die die Quernuten 5 begrenzenden Blockkanten sind zum Reifenäquator A-A wiederum geneigt, wobei die Neigung gleichsinnig zur Neigung der Blöcke in der zentralen Blockreihe erfolgt. Der Neigungswinkel β wird in einem Bereich zwischen 45 und 75°, insbesondere zwischen 60 und 70°, gewählt und beträgt bevorzugt ca. 65°. Hiebei ist jedoch die Anordnung so zu treffen, daß β um mindestens 2° kleiner gewählt wird als α′.

Die Umfangsnuten 7 weisen in Umfangsrichtung Abschnitte auf, die in Querrichtung etwas gegeneinander versetzt sind. Wird in Fig. 1 die rechte Laufflächenhälfte betrachtet, so ist ersichtlich,daß jeweils die Einzelblöcke 1′, 1˝, der die Umfangsnuten 7 voneinander trennenden Blockreihen jeweils einen Blockteil 1′b, 1˝b aufweisen, der in Querrichtung um 5 bis 25°, vorzugsweise ca. 15 %, länger ausgeführt ist als der zweite Blockteil 1′a, 1˝a, wobei die Stirnseite eines längeren Blockteiles 1′b, 1˝b der einen Blockreihe jeweils einer Stirnseite eines kürzeren Blockteiles 1′a, 1˝a aus der benachbarten Blockreihe gegenüber steht. In der zweiten Laufflächenhälfte ist jeweils der andere Blockteil der Einzelblöcke 1′, 1˝ länger ausgeführt.

Zur Vergleichmäßigung des Laufflächenabriebes ist es, wie auch aus Fig. 1 ersichtlich ist, von Vorteil, wenn die Eckbereiche der Einzelblöcke bzw. der Blockteile 1a, 1b, 1′a, 1′b, 1˝a, 1˝b abgeschrägt oder auch abgerundet gestaltet sind.

Es wird weiters darauf verwiesen, daß die Umfangslänge der Blöcke in den Blockreihen über den Umfang variiert wird. Es handelt sich hiebei um eine allgemein bekannte Maßnahme, die zur Minimierung bzw. günstigen Beeinflussung des beim Abrollen des Reifens entstehenden Geräusches gesetzt wird. Bei einer weiteren, nicht dargestellten Ausführungsform können die Umfangsnuten 7 als gerade Nuten ausgebildet werden, wodurch die Blockteile der durch diese Umfangsnuten getrennten Blöcke gleichgroße Quererstreckung aufweisen.

Bei der dargestellten Ausführungsvariante ist eine Anordnung getroffen, bei der die Blöcke benachbarter Blockreihen jeweils um etwa eine Blockteillänge, in Umfangsrichtung betrachtet, gegeneinander verschoben sind. Es ist jedoch auch möglich, zumindest in den 3 mittleren Blockreihen keine derartig verschobene Anordnung vorzusehen, sodaß die Quernuten 4 und die Querrillen 3 im wesentlichen in Querrichtung durchgehende Kanäle bilden.

## Patentansprüche

1. Radialreifen für LKW, insbesondere für deren Antriebsräder mit einem Laufflächenprofil, welches über seine Breite eine Anzahl von durch Umfangsnuten (6, 7) voneinander getrennten Blockreihen aufweist, wobei eine zentrale, entlang des Reifenäquators verlaufende Blockreihe, zwei mittlere und zwei schulterseitig verlaufende Blockreihen vorgesehen sind, und wobei die Einzelblöcke (1, 1′, 1˝) in jeder Blockreihe durch gerade ausgebildete Quernuten bzw. Querrillen (4, 5) voneinander getrennt sind und in Umfangsrichtung verlaufende Blockkanten und Blockkanten, die unter von 90° abweichenden Winkeln zur Äquatorlinie geneigt verlaufen, aufweisen, dadurch gekennzeichnet, daß sich jeder Block (1, 1′, 1˝) aus zwei parallelogrammförmigen Blockteilen (1a, 1b, 1′a, 1′b, 1˝a, 1˝b) zusammensetzt, die durch einen Feineinschnitt (2, 2′, 2˝), der etwa mittig durch den Block (1, 1′, 1˝) verläuft, voneinander getrennt sind, wobei die Quererstreckung der Blockteile (1a, 1b, 1′a, 1′b, 1˝a, 1˝b) größer ist als ihre Umfangserstreckung, wobei jene Blockkanten, die unter von 90° abweichenden Winkeln zur Äquatorlinie geneigt verlaufen, in den mittleren Blockreihen zu den Blockkanten in der zentralen Blockreihe gegensinnig geneigt sind.

2. Radialreifen nach Anspruch 1, dadurch gekennzeichnet, daß die Winkel (α, α′), die die geneigten Blockkanten der Blockteile (1a, 1b, 1′a, 1′b) in der zentralen Blockreihe und den mittleren Blockreihen mit der Umfangsrichtung einschließen zwischen 50 und 80°, vorzugsweise zwischen 65 und 75°, betragen.

3. Radialreifen nach Anspruch 2, dadurch gekennzeichnet, daß diese Winkel (α,α′) gleich groß sind.

4. Radialreifen nach Anspruch 1, dadurch gekennzeichnet, daß der Winkel (β), den die geneigten Blockkanten der Blockteile (1˝a, 1˝b) in den schulterseitig verlaufenden Blockreihen mit der Umfangsrichtung einschließen zwischen 45 und 75°, vorzugsweise zwischen 60 und 70°, beträgt, wobei die Neigung dieser Blockkanten gleichsinnig ist zur Neigung der Blockkanten in der zentralen Blockreihe.

5. Radialreifen nach einem der Ansprüche 1 bis 4, dadurch gekennzeichnet, daß der Winkel (β) der geneigten Blockkanten in den schulterseitig verlaufenden Blockreihen um mindestens 2°, vorzugsweise um etwa 5°, kleiner gewählt wird als der Winkel (α′) der geneigten Blockkanten in den benachbarten Blockreihen.

6. Radialreifen nach einem der Ansprüche 1 bis 5, dadurch gekennzeichnet, daß die zentrale Blockreihe von den benachbarten Blockreihen durch je eine gerade verlaufende Umfangsnut (6), deren Breite maximal 5mm, bevorzugt etwa 3mm, beträgt, getrennt ist.

7. Radialreifen nach einem der Ansprüche 1 bis 6, dadurch gekennzeichnet, daß die die Blöcke (1) in der zentralen Blockreihe voneinander trennenden Querrillen (3) eine Breite von maximal 5mm, bevorzugt etwa 3mm, aufweisen.

8. Radialreifen nach einem der Ansprüche 1 bis 7, dadurch gekennzeichnet, daß die die schulterseitigen Blockreihen von den ihnen benachbarten Blockreihen trennenden Umfangsnuten (7) eine Breite von bis zu 12mm, bevorzugt etwa 10mm, aufweisen.

9. Radialreifen nach einem der Ansprüche 1 bis 8, dadurch gekennzeichnet, daß die die Blöcke in den schulterseitig verlaufenden und den mittleren Blockreihen voneinander trennenden Quernuten (4,5) eine Breite von bis zu 10mm, bevorzugt etwa 8mm, aufweisen.

10. Radialreifen nach einem der Ansprüche 1 bis 9, dadurch gekennzeichnet, daß die paralleogrammförmigen Blockteile jedes Blockes im wesentlichen gleich groß sind.

11. Radialreifen nach einem der Ansprüche 1 bis 10, dadurch gekennzeichnet, daß die Blöcke (1˝) in den schulterseitig verlaufenden Blockreihen und die Blöcke (1′) in den diesen benachbarten Blockreihen jeweils einen Blockteil aufweisen, der in Querrichtung um 5 - 25 %, vorzugsweise um ca. 15 %, länger ausgeführt ist als der zweite Blockteil, wobei die Stirnseite eines längeren Blockteiles der einen Blockreihe jeweils einer Stirnseite eines kürzeren Blockteiles aus der benachbarten Blockreihe gegenüber steht.

12. Radialreifen nach einem der Ansprüche 1 bis 11, dadurch gekennzeichnet, daß die Eckbereiche der Blöcke (1, 1′, 1˝) bzw. deren Blockteile (1a, 1b, 1′a, 1′b, 1˝a, 1˝b) abgeschrägt oder abgerundet ausgebildet sind.

13. Radialreifen nach einem der Ansprüche 1 bis 12, dadurch gekennzeichnet, daß die die Blockteile (1a, 1b, 1′a, 1′b, 1˝a, 1˝b) voneinander trennenden Feineinschnitte (2, 2′, 2˝) kleiner gleich 1mm breit sind.

14. Radialreifen nach einem der Ansprüche 1 bis 13, dadurch gekennzeichnet, daß die Tiefe der Feineinschnitte (2, 2′, 2˝) mindestens drei Viertel der sonstigen Profiltiefe beträgt.

## Claims

1. Radial tyre for heavy goods vehicles, more especially for their drive wheels, having a tread surface profile provided over its width with a number of rows of blocks, which are separated from one another by means of circumferential grooves (6, 7), a central row of blocks being provided which extends along the centre of the tyre, two middle rows of blocks being provided, and two rows of blocks being provided which extend on/along the shoulder side, and the individual blocks (1, 1′, 1˝) in each row of blocks being separated from one another by means of rectilinear transverse grooves or transverse notches (4, 5) and having block edges which extend in the circumferential direction and block edges which extend inclinedly at angles deviating from 90° relative to the centre line, characterised in that each block (1, 1′, 1˝) comprises two parallelogram-shaped block portions (1a, 1b, 1′a, 1′b, 1˝a, 1˝b) separated from one another by means of a fine incision (2, 2′, 2˝), which extends substantially centrally through the block (1, 1′, 1˝), the transverse extent of the block portions (1a, 1b, 1′a, 1′b, 1˝a, 1˝b) being greater than their circumferential extent, those block edges which extend inclinedly at angles deviating from 90° relative to the centre line in the middle rows of blocks being inclined in the opposite direction to the block edges in the cental row of blocks.

2. Radial tyre according to claim 1, characterised in that the angles (α, α′), which the inclined block edges of the block portions (1a, 1b, 1′a, 1′b) in the central row of blocks and the middle rows of blocks form with the circumferential direction, are between 50 and 80°, preferably between 65 and 75°.

3. Radial tyre according to claim 2, characterised in that these angles (α, α′) are the same size.

4. Radial tyre according to claim 1, characterised in that the angle (β), which the inclined block edges of the block portions (1˝a, 1˝b) in the rows of blocks extending on the shoulder side form with the circumferential direction, is between 45 and 75°, preferably between 60 and 70°, the inclination of these block edges being in the same direction as the inclination of the block edges in the central row of blocks.

5. Radial tyre according to one of claims 1 to 4, characterised in that the angle (β) of the inclined block edges in the rows of blocks extending on the shoulder side is selected to be smaller, by at least 2°, preferably by substantially 5°, than the angle (α′) of the inclined block edges in the adjacent rows of blocks.

6. Radial tyre according to one of claims 1 to 5, characterised in that the central row of blocks is separated from the adjacent rows of blocks by means of a respective rectilinearly extending circumferential groove (6), the maximum width of which is 5 mm, preferably substantially 3 mm.

7. Radial tyre according to one of claims 1 to 6, characterised in that the transverse notches (3), which separate the blocks (1) in the central row of blocks from one another, have a maximum width of 5 mm, preferably substantially 3 mm.

8. Radial tyre according to one of claims 1 to 7, characterised in that the circumferential grooves (7), which separate the rows of blocks on the shoulder side from the rows of blocks adjacent them, have a width of up to 12 mm, preferably substantially 10 mm.

9. Radial tyre according to one of claims 1 to 8, characterised in that the transverse grooves (4, 5), which separate the blocks in the rows of blocks extending on the shoulder side and in the middle rows of blocks from one another, have a width of up to 10 mm, preferably substantially 8 mm.

10. Radial tyre according to one of claims 1 to 9, characterised in that the parallelogram-shaped block portions of each block are substantially the same size.

11. Radial tyre according to one of claims 1 to 10, characterised in that the blocks (1˝) in the rows of blocks extending on the shoulder side and the blocks (1′) in the rows of blocks adjacent them have a respective block portion which is longer, when viewed with respect to the transverse direction, by 5 - 25 %, preferably by approx. 15 %, than the second block portion, the end face of a longer block portion of one row of blocks being situated opposite a respective end face of a shorter block portion from the adjacent row of blocks.

12. Radial tyre according to one of claims 1 to 11, characterised in that the corner regions of the blocks (1, 1′, 1˝), or respectively their block portions (1a, 1b, 1′a, 1′b, 1˝a, 1˝b), are bevelled or rounded.

13. Radial tyre according to one of claims 1 to 12, characterised in that the fine incisions (2, 2′, 2˝), which separate the block portions (1a, 1b, 1′a, 1′b, 1˝a, 1˝b) from one another, have a width which is smaller than or equal to 1 mm.

14. Radial tyre according to one of claims 1 to 13, characterised in that the depth of the fine incisions (2, 2′, 2˝) is at least three-quarters of the remaining profile depth.

## Revendications

1. Pneu à carcasse radiale pour camion, notamment pour les roues de commande de celui-ci comportant une sculpture de bande de roulement, qui présente sur sa largeur une pluralité de séries de blocs séparés entre elles par des gorges périphériques (6, 7) deux séries de blocs médianes et deux séries de blocs s'étendant au niveau de l'épaulement étant prévues, et ce en quoi les blocs individuels (1, 1′, 1˝) sont séparés dans chaque série de blocs par des gorges ou rainures transversales de configuration droite (4, 5) et des bords de blocs s'étendant dans la direction périphérique, bords de blocs inclinés selon des angles s'écartant de 90° par rapport à la ligne de cercle équatoriale, caractérisé en ce que chaque bloc (1, 1′, 1˝) est constitué de deux parties de bloc (1a, 1b, 1′a, 1′b, 1˝a, 1˝b) en forme de parallélogramme qui sont séparées entre elles par une fine échancrure (2, 2′, 2˝) qui s'étend sensiblement centralement à travers le bloc, l'extension transversale des parties de bloc (1a, 1b, 1′a, 1′b, 1˝a, 1˝b) étant supérieure à son extension périphérique, ce en quoi les bords de blocs qui sont inclinés selon des angles s'écartant de 90° par rapport à la ligne de cercle équatoriale sont inclinés dans les séries de blocs médianes dans le sens contraire aux bords de blocs dans la série de blocs centrale.

2. Pneu à carcasse radiale selon la revendication 1, caractérisé en ce que les angles (α, α′) qui renferment les bords de blocs inclinés des parties de bloc (1a, 1b, 1′a, 1′b) dans la série de blocs centrale et dans les séries de blocs médianes dans la direction périphérique présentent un angle de 50 et 80°, de préférence entre 65 et 75°.

3. Pneu à carcasse radiale selon la revendication 2, caractérisé en ce que les angles (α, α′) sont de même grandeur.

4. Pneu à carcasse radiale selon la revendication 1, caractérisé en ce que l'angle (β) que renferment les bords de blocs inclinés des parties de bloc (1˝a, 1˝b) dans les séries de blocs s'étendant au niveau de l'épaulement dans la direction périphérique sont entre 45 et 75°, de préférence entre 60 et 70°, ce en quoi l'inclinaison de ces bords de blocs se situe dans le même sens par rapport à l'inclinaison des bords de blocs dans la série de blocs centrale.

5. Pneu à carcasse radiale selon l'une des revendications 1 à 4, caractérisé en ce que l'angle (β) des bords de blocs inclinés dans les séries de blocs s'étendant au niveau de l'épaulement est sélectionné de façon à être d'au moins 2°, de préférence d'au moins sensiblement 5° plus petit que l'angle (α′) des bords de blocs inclinés dans les séries de blocs limitrophes.

6. Pneu à carcasse radiale selon l'une des revendications 1 à 5, caractérisé en ce que la série de blocs centrale est séparée des séries de blocs limitrophes par respectivement une gorge périphérique (6) s'étendant en ligne droite et dont la largeur est au maximum de 5 mm, de préférence d'environ 3 mm.

7. Pneu à carcasse radiale selon l'une des revendications 1 à 6, caractérisé en ce que les gorges transversales (3) séparant réciproquement les blocs (1) dans la série de blocs centrale présentent une largeur de 5 mm maximum, de préférence d'environ 3 mm.

8. Pneu à carcasse radiale selon l'une des revendications 1 à 7, caractérisé en ce que les gorges périphériques (7) séparant les séries de blocs au niveau épaulement de leurs séries de blocs limitrophes présentent une largeur jusqu'à 12 mm, de préférence d'environ 10 mm.

9. Pneu à carcasse radiale selon l'une des revendications 1 à 8, caractérisé en ce que les gorges transversales (4, 5) séparant entre eux les blocs dans les séries de blocs s'étendant au niveau de l'épaulement et les séries de blocs médianes présentent une largeur jusqu'à 10 mm, de préférence environ 8 mm.

10. Pneu à carcasse radiale selon l'une des revendications 1 à 9, caractérisé en ce que les parties de blocs en forme de parallélogramme de chaque bloc sont essentiellement de même grandeur.

11. Pneu à carcasse radiale selon l'une des revendications 1 à 10, caractérisé en ce que les blocs (1˝) et les séries de blocs s'étendant au niveau de l'épaulement et les blocs (1′) dans les séries de blocs limitrophes de ceux-ci présentent respectivement une partie de blocs qui dans la direction transversale est réalisée d'une longueur de 5 - 25 %, de préférence d'environ 15 % supérieure à la deuxième partie de bloc, ce en quoi le côté frontal d'une partie de bloc de plus grande longueur d'une série de blocs se situe chaque fois en regard d'un côté frontal d'une partie de bloc plus courte de la série de blocs limitrophe.

12. Pneu à carcasse radiale selon l'une des revendications 1 à 11, caractérisé en ce que les zones angulaires des blocs (1, 1′, 1˝) ou de leurs parties de blocs (1a, 1b, 1′a, 1′b, 1˝a, 1˝b) sont chanfreinées ou arrondies.

13. Pneu à carcasse radiale selon l'une des revendications 1 à 12, caractérisé en ce que les échancrures fines (2, 2′, 2˝) séparant entre elles les parties de blocs (1a, 1b, 1'a, 1'b, 1˝a, 1˝b) sont d'une largeur plus petite ou égale à 1 mm.

14. Pneu à carcasse radiale selon l'une des revendications 1 à 13, caractérisé en ce que la profondeur des échancrures fines (2, 2′, 2˝) est égale à au moins aux trois quarts de la profondeur des autres sculptures.
